# EUROPEAN PATENT APPLICATION

(11) **EP 4 834 832 A1**
(43) Date of publication of application: **04.11.2026**
(21) Application number: 24913368.7
(22) Date of filing: 24.12.2024
(51) Int. Cl.: C01B 32/05, C01B 33/02, H01M 4/36, H01M 4/38, H01M 4/587, H01M 4/02

(54) **CARBON/SILICON-POLYMER COMPOSITE AND METHOD FOR MANUFACTURING SAME**

(30) Priority: 29.12.2023 KR 20230197025
(71) Applicant: Hanwha Solutions Corporation, Jung-gu Seoul 04541 (KR); Korea Advanced Institute of Science and Technology, Daejeon 34141 (KR)
(72) Inventor: KIM, Do Heung, Seoul 04541 (KR); JEON, Hyo Jin, Seoul 04541 (KR); YIM, Kyoungwon, Seoul 04541 (KR); IM, Jangbin, Daejeon 34128 (KR); KANG, Byungchan, Seoul 04541 (KR); IM, Sung Gap, Daejeon 34141 (KR); KANG, Minjeong, Daejeon 34141 (KR); JANG, Wontae, Daejeon 34141 (KR); CHOI, Keonwoo, Daejeon 34141 (KR)
(74) Representative: Berggren Oy
(86) International application number: PCT/KR2024/021052
(87) International publication number: WO 2025/143761

(57) **Abstract**

The present invention relates to a carbon/silicon-polymer composite and a method for manufacturing same. A carbon/silicon-polymer composite according to an embodiment of the present invention has excellent thickness uniformity of a polymer thin film, while the polymer thin film hardly affects electrical conductivity and lithium-ion conductivity. Therefore, when used as a negative electrode material, the carbon/silicon-polymer composite can act as a stable solid electrolyte interphase layer while maintaining high specific capacity and Coulombic efficiency, and thus can suppress degradation in battery performance and lifespan.

## Description

### TECHNICAL FIELD

The present invention relates to a carbon/silicon-polymer composite, and more particularly, to a carbon/silicon-polymer composite and a method for producing the same.

### BACKGROUND

Recently, with the development of the information and communications industry, demand for electronic devices has rapidly increased, and with the activation of the electric vehicle market, demand for batteries used in such electronic devices and electric vehicles has also greatly increased.

Secondary batteries, such as lithium secondary batteries including a liquid electrolyte and all-solid-state batteries, are most widely used for such applications because secondary batteries have a high energy density and a low degree of self-discharge when not in use. Secondary batteries are generally composed of a positive electrode, a negative electrode, and an electrolyte (liquid or solid), and a carbon-based material such as graphite is widely used as a negative electrode material of the secondary battery.

Recently, attempts have been made to use a silicon-based negative electrode material in order to improve the capacity of secondary batteries. Silicon has an extremely high theoretical energy density and thus has attracted attention as a next-generation battery negative electrode material capable of replacing graphite. However, since silicon reacts with lithium during charging and discharging and thus increases in volume by up to about 300%, silicon, which is the negative electrode material, is fractured as charging and discharging proceed, and thus has a problem in that the mechanical stability thereof is very poor.

In order to solve these problems, Japanese Patent No. 4393610 discloses a negative electrode material in which silicon is composited with carbon through a mechanical processing process and a surface of silicon particles is coated with a carbon layer using chemical deposition (CVD), but there is a limit in suppressing volume expansion and contraction during charging and discharging.

In addition, silicon-based negative electrode materials also have a problem in that a solid electrolyte interphase (SEI) layer excessively generated in a process of pulverizing and micronizing a silicon raw material exhibits instability, thereby causing deterioration in stability and electrical performance of a battery.

### [Prior Art Document]

### [Patent Document]

(Patent Document 0001) Japanese Registed Patent No. 4393610

### DISCLOSURE

### TECHNICAL PROBLEM

The present invention is directed to providing a carbon/silicon-polymer composite in which a polymer thin film is formed on a carbon-silicon composite having silicon coated on the surface of and/or inside the pores of a porous carbon support having controlled pore properties.

The present invention is also directed to providing a method for producing the carbon/silicon-polymer composite.

The present invention is also directed to providing a negative electrode material including the carbon/silicon-polymer composite.

### TECHNICAL SOLUTION

The present invention provides a carbon/silicon-polymer composite, comprising: a carbon-silicon composite including a porous carbon support and silicon disposed on a surface of the porous carbon support and inside pores thereof; and a polymer thin film disposed on the surface of the porous carbon support, inside the pores thereof, and on a surface of the silicon.

According to one embodiment of the present invention, the porous carbon support may have a BET specific surface area of 300 to 3,000 m²/g, a tap density of 0.05 to 0.5 g/mL, and an average particle diameter of 1 to 20 µm.

In addition, the silicon may be present in an amount of 5 to 80 wt% based on a total weight of the carbon/silicon-polymer composite.

In addition, the polymer thin film may be present in an amount of 1 to 30 wt% based on a total weight of the carbon/silicon-polymer composite.

In addition, the polymer thin film may have a thickness of 1 to 450 nm.

In addition, the present invention provides a method for producing a carbon/silicon-polymer composite, comprising: (1) producing a carbon-silicon composite by forming silicon on a surface of and inside pores of a porous carbon support; and (2) producing a carbon/silicon-polymer composite by forming a polymer thin film on a surface of the porous carbon support of the carbon-silicon composite, inside pores thereof, and on a surface of the silicon through initiator-based chemical vapor deposition (iCVD).

According to one embodiment of the present invention, step (2) may include (2-1) supplying the carbon-silicon composite into a reactor; (2-2) supplying a monomer and an initiator into the reactor to which the carbon-silicon composite has been supplied; and (2-3) activating the initiator to polymerize the monomer, thereby forming the polymer thin film on the surface of the porous carbon support of the carbon-silicon composite, inside the pores thereof, and on the surface of the silicon.

In addition, in step (2-2), the monomer may be supplied at a flow rate of 0.1 sccm to 10 sccm, and the initiator may be supplied at a flow rate of 0.1 sccm to 5 sccm.

In addition, the initiator may be activated through a predetermined heat treatment, and the heat treatment may be performed at a temperature in the range of 135°C to 350°C.

In addition, step (2-3) may be performed under a vacuum condition at a pressure of 50 to 1,000 mTorr for 10 minutes to 6 hours.

In addition, the present invention provides a negative electrode material including the above-described carbon/silicon-polymer composite and a carbon-based negative electrode material.

In addition, the present invention provides an all-solid-state battery including an SEI (Solid Electrolyte Interphase) layer including the above-described carbon/silicon-polymer composite.

In addition, the present invention provides a lithium ion battery including the above-described negative electrode material.

### ADVANTAGEOUS EFFECT

A carbon/silicon-polymer composite according to an embodiment of the present invention has excellent thickness uniformity of a polymer thin film, while the polymer thin film hardly affects electrical conductivity and lithium-ion conductivity. Therefore, when used as a negative electrode material, the carbon/silicon-polymer composite can act as a stable solid electrolyte interphase layer while maintaining high specific capacity and Coulombic efficiency, and thus can suppress degradation in battery performance and lifespan.

### BRIEF DESCRIPTION OF THE DRAWINGS

FIG. 1 schematically illustrates a process of forming a polymer thin film on a carbon-silicon composite by initiator-based chemical vapor deposition (iCVD) according to one embodiment of the present invention.
FIG. 2 is a schematic view of a carbon/silicon-polymer composite according to one embodiment of the present invention.
FIG. 3 shows XPS (X-ray Photoelectron Spectroscopy) analysis results of the carbon-silicon composite according to Comparative Example 1 (FIG. 3a) and the carbon/silicon-polymer composites according to Examples 1 to 4 (FIGS. 3b to 3e) of the present invention.
FIG. 4 is a TEM image of the carbon-silicon composite according to Comparative Example 1 (FIG. 4a) and TEM images of the carbon/silicon-polymer composites according to Example 1, Example 2, and Example 5 (FIGS. 4b, 4c, and 4d) of the present invention.
FIG. 5 is a graph showing electrochemical evaluation results, namely, charge-discharge efficiency, ICE, and capacity retention, of the carbon/silicon-polymer composites according to Examples 1 to 6 and the carbon-silicon composite according to Comparative Example 1 of the present invention.

### BEST MODES FOR CARRYING OUT THE INVENTION

The present invention is not limited to the embodiments disclosed below, and may be modified in various forms as long as the spirit of the invention is not altered.

In the present specification, the terms "comprise" or "include" mean that other components may be further included unless otherwise specified.

Unless otherwise specified, all numerical values and expressions indicating the amounts of components, reaction conditions, and the like described in the present specification are to be understood as being modified by the term "about" in all instances.

In the present specification, when one component is described as being formed on, under, connected to, or coupled with another component, such descriptions are intended to include both direct formation, connection, or coupling between the components and indirect formation, connection, or coupling via another component.

Hereinafter, the present invention will be described in more detail.

### Carbon/Silicon-Polymer Composite

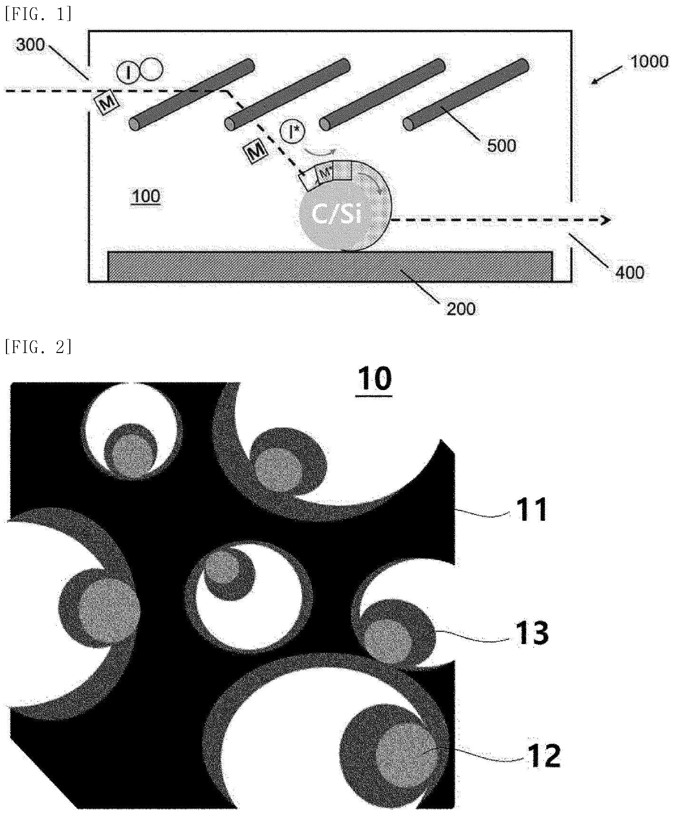

As shown in FIG. 2, according to one embodiment of the present invention, there is provided a carbon/silicon-polymer composite 10 including: a porous carbon support 11; a carbon-silicon composite including silicon 12 disposed on the surface of and inside the pores of the porous carbon support 11; and a polymer thin film 13 disposed on the surface of the porous carbon support 11, inside the pores thereof, and on the surface of the silicon 12.

Hereinafter, each component of the carbon/silicon-polymer composite 10 according to one embodiment of the present invention will be described.

### Porous Carbon Support

The carbon/silicon-polymer composite 10 according to an embodiment of the present invention includes a porous carbon support 11.

The porous carbon support 11 may have a mesopore volume ratio of 10 to 80%, preferably 30 to 60%, and more preferably 40 to 50%, based on the total pore volume, wherein the mesopores have a pore size of 2 to 50 nm. If the volume ratio of mesopores in the porous carbon support is less than 10%, an excessively large number of micropores may cause silicon and the polymer to be formed relatively extensively on the outside of particles, and if the volume ratio of mesopores in the porous carbon support exceeds 80%, the hardness of the particles may be insufficient, and thus, when an electrode is produced using the same, the structure of the electrode may collapse.

In addition, the porous carbon support 11 may have a BET specific surface area of 300 to 3,000 m²/g. Preferably, the porous carbon support 11 may have a BET specific surface area of 300 to 1,500 m²/g, more preferably 500 to 1,500 m²/g. If the BET specific surface area of the porous carbon support is less than 300 m²/g, an excessively large number of macropores may result in an insufficient number of effective pores, and if the BET specific surface area of the porous carbon support exceeds 3,000 m²/g, an excessively large number of micropores may cause silicon and the polymer to be deposited extensively on the outside of particles.

In addition, the porous carbon support 11 may have a tap density of 0.05 to 0.5 g/mL. Preferably, the porous carbon support 11 may have a tap density of 0.05 to 0.3 g/mL, more preferably 0.1 to 0.3 g/mL. If the tap density of the porous carbon support is less than 0.05 g/mL, process control during deposition of the silicon source and formation of the polymer thin film may be difficult, and thus the yield may decrease, and if the tap density of the porous carbon support exceeds 0.5 g/mL, uniform coating may be difficult during deposition of the silicon source and formation of the polymer thin film.

Further, the porous carbon support 11 may have an average particle size of 1 to 20 µm. Preferably, the porous carbon support 11 may have an average particle size of 3 to 20 µm, more preferably 3 to 10 µm. If the average particle size of the porous carbon support is less than 1 µm, the silicon source, the monomer for forming the polymer thin film, and the initiator may not sufficiently penetrate into the pores and may be deposited/adsorbed mostly only on the outside of the particles, and if the average particle size of the porous carbon support exceeds 20 µm, silicon and the polymer may be difficult to sufficiently form inside the pores.

Since the carbon/silicon-polymer composite 10 according to an embodiment of the present invention includes the porous carbon support 11 having the above characteristics, when the carbon/silicon-polymer composite 10 is used as a negative electrode material, the carbon/silicon-polymer composite 10 has excellent electrical conductivity and can relieve stress caused by volume expansion of silicon.

### Silicon

The carbon/silicon-polymer composite 10 according to an embodiment of the present invention includes silicon 12 disposed on the surface of and inside the pores of the porous carbon support 11.

By arranging the porous carbon support 11 and the silicon 12 as described above in the carbon/silicon-polymer composite 10 according to the present invention, a negative electrode material produced from the carbon/silicon-polymer composite 10 according to the present invention can have a high electrical capacity while minimizing the effect caused by volume expansion of silicon.

In this case, since the silicon 12 serves to charge lithium, when the carbon/silicon-polymer composite 10 according to an embodiment of the present invention is used as a negative electrode material, the silicon may act as a main negative electrode material.

The silicon 12 may be crystalline or amorphous, preferably amorphous or a phase similar thereto. When the silicon 12 is crystalline, the smaller the size of crystallites, the denser a composite that can be obtained, and thus the strength of the matrix can be enhanced to prevent cracking. Accordingly, the initial efficiency or cycle life characteristics of a secondary battery may be improved. Meanwhile, when the silicon 12 is amorphous or a phase similar thereto, expansion or contraction during charging and discharging of a secondary battery may be reduced, and battery performance such as capacity characteristics may be improved.

The particle size of the silicon may be selected so that the carbon/silicon-polymer composite according to an embodiment of the present invention is suitable for use as a negative electrode material. Specifically, the average particle size of the silicon may be 10 nm to 50 µm, preferably 10 nm to 25 µm. Since the silicon satisfies the above average particle size range, it may be more advantageous for achieving the object of the present invention.

Meanwhile, the silicon 12 may be 5 to 80 wt%, preferably 10 to 50 wt%, based on the total weight of the carbon/silicon-polymer composite 10 according to the present invention. If the silicon is less than 5 wt% based on the total weight of the carbon/silicon-polymer composite, electrical capacity may decrease, and if the silicon exceeds 80 wt%, problems caused by volume expansion of silicon during charging and discharging cannot be resolved, thereby causing structural damage to the negative electrode material and deteriorating cycle characteristics.

The silicon 12 may further include a silicon oxide compound. The silicon oxide compound may be represented by the general formula SiOₓ, wherein 0.5≤x≤2. Here, when x is less than 0.5, expansion and contraction may increase during charging and discharging of a secondary battery, and life characteristics may deteriorate. When x exceeds 2, inactive oxides increase, and thus the initial efficiency of the secondary battery may decrease.

The content of the silicon oxide compound in the silicon may be 50 wt% or less based on the total weight of the silicon. If the content of the silicon oxide compound in the silicon exceeds 50 wt%, the initial efficiency of the secondary battery may decrease.

### Polymer Thin Film

The carbon/silicon-polymer composite 10 according to an embodiment of the present invention includes a polymer thin film 13 disposed on the surface of the porous carbon support 11, inside the pores thereof, and on the surface of the silicon 12.

In the carbon/silicon-polymer composite according to an embodiment of the present invention, the polymer thin film on the carbon-silicon composite is formed by initiator-based chemical vapor deposition (iCVD), which will be described below.

The polymer thin film is formed by iCVD, and the type of material thereof is not particularly limited so long as it hardly affects the electrical conductivity and lithium-ion conductivity of the negative electrode material. Specifically, the polymer thin film may be formed by polymerization or copolymerization of at least one vinyl or acrylate monomer including at least one of a siloxane group, an amine group, a fluorine group, a glycidyl group, and an aromatic hydrocarbon group.

In a specific embodiment of the present invention, the polymer thin film may be formed by polymerization from at least one monomer selected from the group consisting of 4-vinyl pyridine (4VP), 2,4,6,8-tetramethyl-2,4,6,8-tetravinylcyclotetrasiloxane, 3,3,4,4,5,5,6,6,7,7,8,8,9,9,10,10,10-heptadecafluorodecyl methacrylate (PFDMA), 1,3,5,7-tetravinyl-1,3,5,7-tetramethylcyclotetrasiloxane (V4D4), 1,3,5-trimethyl-1,3,5-trivinylcyclotrisiloxane (V3D3), hexavinyldisiloxane (HVDS), glycidyl methacrylate (GMA), divinylbenzene (DVB), diethylene glycol divinyl ether, diethyleneglycol diacrylate (DEGDA), ethylene glycol dimethacrylate, dimethylaminoethyl methacrylate, methacrylic acid, 1,3-divetenyl-1,1,3,3-tetramethyl-disiloxane, 1H,1H,2H,2H-perfluorodecyl acrylate (PFDA), perfluorodecyl methacrylate, dodecafluoroheptyl acrylate, pentafluorophenyl methacrylate, 3,3,4,4,5,5,6,6,7,7,8,8,9,9,9-pentadecafluorononyl acrylate, 2-methyl-3,3,4,4,5,5,6,6,7,7,8,8,9,9,9-pentadecafluorononyl acrylate, 3,3,4,4,5,5,6,6,7,7,8,8,8-tridecafluorooctyl acrylate, 2-methyl-3,3,4,4,5,5,6,6,7,7,8,8,8-tridecafluorooctyl acrylate, 3,3,4,4,5,5,6,6,7,7,7-undecafluoroheptyl acrylate, 2-methyl-3,3,4,4,5,5,6,6,7,7,7-undecafluoroheptyl acrylate, 3,3,4,4,5,5,6,6,6-nonafluorohexyl acrylate, 2-methyl-3,3,4,4,5,5,6,6,6-nonafluorohexyl acrylate, 3,3,4,4,5,5,6,6,7,7,8,8,9,9,10,10,11,11,11-nonadecafluoroundecyl acrylate, 2-methyl-3,3,4,4,5,5,6,6,7,7,8,8,9,9,10,10,11,11,11-nonadecafluoroundecyl acrylate, 3,3,4,4,5,5,6,6,7,7,8,8,9,9,10,10,11,11,12,12,12-heneicosafluorododecyl acrylate, 2-methyl-3,3,4,4,5,5,6,6,7,7,8,8,9,9,10,10,11,11,12,12,12-heneicosafluorodo decyl acrylate, 3,3,4,4,5,5,6,6,7,7,8,8,9,9,10,10,11,11,12,12,13,13,13-tricosafluorotridecy l acrylate, 2-methyl-3,3,4,4,5,5,6,6,7,7,8,8,9,9,10,10,11,11,12,12,13,13,13-tricosafluo rotridecyl acrylate, 3,3,4,4,5,5,6,6,7,7,8,8,9,9,10,10,11,11,12,12,13,13,14,14,14-pentacosafluor otetradecyl acrylate, 2-methyl-3,3,4,4,5,5,6,6,7,7,8,8,9,9,10,10,11,11,12,12,13,13,14,14,14-penta cosafluorotetradecyl acrylate, dimethylaminoethyl methacrylate, dimethylaminoethyl acrylate, diethylaminoethyl methacrylate, and diethylaminoethyl acrylate.

In a preferred specific embodiment of the present invention, the polymer thin film may be formed by polymerization from at least one monomer selected from the group consisting of 1H,1H,2H,2H-perfluorodecyl acrylate, dimethylaminomethyl styrene, divinylbenzene, glycidyl methacrylate, 1,3,5,7-tetravinyl-1,3,5,7-tetramethylcyclotetrasiloxane, 1,3,5-trimethyl-1,3,5-trivinylcyclotrisiloxane, and hexavinyldisiloxane, but is not particularly limited thereto.

In a specific embodiment of the present invention, the thickness of the polymer thin film may be 1 to 450 nm, preferably 1 to 200 nm, more preferably 1 to 100 nm, and still more preferably 1 to 50 nm. When the thickness of the polymer thin film is within this range, the polymer thin film can act as a stable solid electrolyte interphase layer between silicon and the electrolyte while hardly affecting the electrical conductivity and lithium-ion conductivity of the negative electrode material, thereby suppressing deterioration in battery life.

Meanwhile, the polymer thin film may be 1 to 30 wt%, preferably 1 to 20 wt%, based on the total weight of the carbon/silicon-polymer composite 10 according to the present invention. If the polymer thin film is less than 1 wt% based on the total weight of the carbon/silicon-polymer composite, the polymer thin film may fail to act as a stable solid electrolyte interphase layer, and if the silicon exceeds 30 wt%, the polymer thin film may rather become a factor that interferes with the reaction on the silicon surface.

### Method for Producing Carbon/Silicon-Polymer Composite

The carbon/silicon-polymer composite according to one embodiment of the present invention is produced by a production method including: (1) producing a carbon-silicon composite by forming silicon on the surface of and inside the pores of a porous carbon support; and (2) producing a carbon/silicon-polymer composite by forming a polymer thin film on the surface of the porous carbon support, inside the pores thereof, and on the surface of the silicon in the carbon-silicon composite through initiator-based chemical vapor deposition (iCVD).

Hereinafter, each step of the method for producing a carbon-silicon/polymer composite according to one embodiment of the present invention will be described.

### Step (1)

In step (1), a carbon-silicon composite is produced by forming silicon on the surface of and inside the pores of a porous carbon support.

In a specific embodiment of the present invention, the step of forming silicon on the surface of and inside the pores of the porous carbon support may be performed using an apparatus known in the art to which the present invention pertains (for example, a rotary kiln) and a method known in the art (for example, vapor deposition (CVD)). Specifically, silicon may be formed on the surface of and inside the pores of the porous carbon support by supplying a silicon source to the porous carbon support and performing CVD.

In a specific embodiment of the present invention, the silicon source may include at least one selected from silane (SiH₄), dichlorosilane (SiH₂Cl₂), silicon tetrafluoride (SiF₄), silicon tetrachloride (SiCl₄), methylsilane (CH₃SiH₃), and disilane (Si₂H₆), but the present invention is not particularly limited thereto.

The CVD of the silicon source may be performed at a temperature of 300 to 700°C. For example, the CVD of the silicon source may be performed at a temperature of 400 to 600°C, 400 to 500°C, or 400 to 450°C, but is not particularly limited to this range. In addition, the CVD may be performed at atmospheric pressure and, if necessary, may also be performed under a low vacuum of about 10 Torr. In addition, the deposition may be performed, for example, under a silane (SiH₄) gas atmosphere of 50 sccm or more to 500 sccm or less.

### Step (2)

In step (2), a polymer thin film is formed on the surface of the porous carbon support of the carbon-silicon composite, inside the pores thereof, and on the surface of the silicon through initiator-based chemical vapor deposition (iCVD), thereby producing a carbon/silicon-polymer composite.

In this case, initiator-based chemical vapor deposition (iCVD) refers to a process of polymerizing a monomer by decomposing a gaseous initiator into radicals. In initiator-based chemical vapor deposition, energy is supplied by a heat source such as a heated filament or by UV light, and thus deposition of the polymer thin film occurs, so that the process may appear not to be significantly different from a conventional CVD process for deposition of an inorganic thin film. However, in the iCVD process, the initiator is activated at a relatively low temperature in the range of 135 to 350°C, preferably 140 to 340°C. In addition, the surface temperature of the carbon-silicon composite on which the polymer thin film is deposited is maintained at a low temperature in the range of 10 to 50°C, preferably 13 to 45°C. Due to such a low surface temperature, iCVD can be usefully employed to deposit a polymer thin film on various substrates that are vulnerable to mechanical or chemical impact. In addition, since the iCVD process is carried out under a vacuum in the range of 50 to 1,000 mTorr, preferably 60 to 900 mTorr, high-vacuum equipment is not required.

Meanwhile, according to one embodiment of the present invention, step (2) may include: (2-1) supplying the carbon-silicon composite into a reactor; (2-2) supplying a monomer and an initiator into the reactor into which the carbon-silicon composite has been supplied; and (3) activating the initiator to polymerize the monomer, thereby forming a polymer thin film on the surface of the porous carbon support of the carbon-silicon composite, inside the pores thereof, and on the surface of the silicon.

FIG. 1 schematically illustrates a process of forming a polymer thin film by initiator-based chemical vapor deposition (iCVD) on the surface of the porous carbon support, inside the pores thereof, and on the surface of the silicon according to an embodiment of the present invention. A method for producing a carbon/silicon-polymer composite according to an embodiment of the present invention will be described with reference to FIG. 1.

### Step (2-1)

In step (2-1), the carbon-silicon composite is supplied into a reactor.

The reactor used in the method for producing a carbon/silicon-polymer composite according to one embodiment of the present invention is not particularly limited in structure so long as it is capable of forming a polymer thin film on the carbon-silicon composite using initiator-based chemical vapor deposition (iCVD), which will be described below.

In a specific embodiment of the present invention, the reactor 1000 may include a chamber 100, a mounting part 200, an inlet 300, an outlet 400, and a heating element 500.

The carbon-silicon composite may be disposed on the mounting part 200 provided at the lower end of the chamber 100 of the reactor 1000. The shape, size, and material of the mounting part are not particularly limited so long as the mounting part can accommodate the carbon-silicon composite. Specifically, the mounting part may be in the form of a flat plate on which the carbon-silicon composite can be spread and arranged so as to overlap with itself as little as possible. More specifically, a silicon substrate (wafer) may be used as the mounting part for accommodating the carbon-silicon composite, but the present invention is not particularly limited thereto.

The mounting part may be connected to a position-changing means (not shown) capable of changing the position of the carbon-silicon composite. The position-changing means may serve to allow a polymer thin film to be uniformly formed on the carbon-silicon composite in step (2-3), which will be described below, by changing or rotating the position of the carbon-silicon composite disposed on the silicon substrate, for example, by vibrating or moving the mounting part, which is the silicon substrate, but the present invention is not particularly limited thereto.

### Step (2-2)

In step (2-2), a monomer and an initiator are supplied into the reactor.

At this time, the monomer (M) and the initiator (I) may be vaporized and supplied into the chamber 100 through the inlet 300 of the reactor 1000.

The monomer (M) is a material that has volatility and can be activated by the initiator (I) to form a polymer. The details of the monomer are as described above in the section of the carbon/silicon-polymer composite.

The initiator (I) is a material that is decomposed by heat or light to form free radicals, and the kind thereof is not particularly limited so long as it is a material capable of activating the monomer to form a polymer. Preferably, the initiator may be a peroxide. Specifically, the initiator may include at least one selected from the group consisting of di-t-butyl peroxide, t-butyl peroxybenzoate, benzoyl peroxide, methyl ethyl ketone peroxide, lauryl peroxide, and benzophenone, but the present invention is not particularly limited thereto. Most preferably, the initiator may be di-t-butyl peroxide.

At this time, the flow rate of the monomer in the reactor may be from 0.1 sccm to 10 sccm. Specifically, the monomer flow rate may be 0.1 sccm or more, or 0.1 sccm or more and 10 sccm or less, 5 sccm or less, or 4 sccm or less.

In addition, the flow rate of the initiator in the reactor may be from 0.1 sccm to 5 sccm. Specifically, the initiator flow rate may be 0.1 sccm or more and 5 sccm or less, 3 sccm or less, or 2 sccm or less.

### Step (2-3)

In step (2-3), the initiator is activated to polymerize the monomer, thereby forming a polymer thin film on the surface of the porous carbon support of the carbon-silicon composite, inside the pores thereof, and on the surface of the silicon.

First, the initiator (I) supplied in a vaporized state into the chamber 100 of the reactor 1000 is activated by contact with the heating element 500 to form free radicals (I*). The heating element may be, for example, a plurality of filaments heated by electricity, but the present invention is not particularly limited thereto. The temperature of the heating element is not limited so long as the heating element can decompose and activate the initiator, but is preferably in the range of 135 to 350°C, more preferably in the range of 140 to 340°C, from the viewpoint of preventing changes in the properties of the reactants.

The free radicals (I*) generated from the initiator and the monomer (M) move to a lower portion of the chamber and are adsorbed on the surface of the porous carbon support, inside the pores thereof, and on the surface of the silicon in the carbon-silicon composite accommodated on the mounting part 200. The monomer adsorbed on the surface of the porous carbon support of the carbon-silicon composite, inside the pores thereof, and on the surface of the silicon is activated (M*) by the free radicals (I*), and polymerization proceeds to form a polymer thin film on the surface of the porous carbon support of the carbon-silicon composite, inside the pores thereof, and on the surface of the silicon.

The gaseous initiator and monomer remaining after use in the reaction of step (2-3) may be discharged out of the reactor through the outlet 400.

In step (2-3), in order to increase the adsorption rate of the monomer and the free radicals, it is preferable to maintain the surface temperature of the carbon-silicon composite at a low level. Specifically, the surface temperature of the carbon-silicon composite is preferably in the range of 10 to 50°C, preferably 13 to 45°C, but is not particularly limited thereto. In order to maintain the surface temperature of the carbon-silicon composite within the above range, the reactor 1000 may further include a cooling part (not shown) disposed below the mounting part 200. The cooling part (not shown) is not particularly limited in cooling method or structure so long as it can control the surface temperature of the carbon-silicon composite within the above range.

Step (2-3) may be carried out under a vacuum in the range of 50 to 1,000 mTorr, preferably 60 to 900 mTorr. This vacuum range can be provided even with a simple rotary pump rather than a high-vacuum pump.

In addition, step (2-3) may be performed for 10 minutes to 6 hours, preferably 30 minutes to 2 hours, but is not limited thereto. However, when the reaction time satisfies the above time range, a polymer thin film having a desired thickness can be uniformly formed.

The properties of the polymer thin film formed in step (2-3) can be easily controlled by adjusting the process parameters of iCVD. That is, by controlling variables such as the pressure and temperature in the chamber, the reaction time, the flow rates of the initiator and the monomer, and the temperatures of the heating element and the surface of the carbon-silicon composite and the inside of the pores, the molecular weight of the polymer thin film, the thickness of the thin film, the composition thereof, and the deposition rate thereof can be easily controlled.

### Preliminary Steps

Meanwhile, according to one embodiment of the present invention, before step (1), the method for producing a carbon/silicon-polymer composite may further include: (a) synthesizing pitch by pyrolyzing and polycondensing a petroleum-based raw material; (b) solidifying and pelletizing the pitch to obtain pelletized pitch, or solidifying, pelletizing, and pulverizing the pitch to obtain powdered pitch; (c) stabilizing the pelletized pitch or the powdered pitch; (d) carbonizing the stabilized pitch to obtain a carbonized product; and (e) activating the carbonized product to obtain a porous carbon support.

In step (a), pitch may be synthesized by pyrolyzing and polycondensing a petroleum-based raw material.

In a specific embodiment of the present invention, the petroleum-based raw material may include at least one selected from the group consisting of pyrolysis fuel oil (PFO), naphtha cracking bottom oil (NCB), ethylene cracker bottom oil (EBO), vacuum residue (VR), de-asphalted oil (DAO), atmospheric residue (AR), RFCC-DO, residue fluid catalytic cracking decant oil (RFCC-DO), and heavy aromatic oil. In a preferred specific embodiment of the present invention, the petroleum-based raw material may include pyrolysis fuel oil.

In a specific embodiment of the present invention, the petroleum-based raw material may include aromatic compounds in an amount of 10 to 90 wt%. Preferably, the petroleum-based raw material may include aromatic compounds in an amount of 20 to 80 wt%, and more preferably 30 to 70 wt%. When the content of aromatic compounds in the petroleum-based raw material satisfies the above range, a porous carbon support having controlled pore properties may be obtained even when a solid pitch pellet, which will be described below, is stabilized, carbonized, and activated without separately pulverizing the solid pitch pellet.

In a specific embodiment of the present invention, the aromatic compound may be a compound having 1 to 4 aromatic rings. Specifically, the aromatic compound may include at least one selected from the group consisting of substituted or unsubstituted benzene, naphthalene, phenanthrene, indene, biphenyl, anthracene, tetralin, and fluorene. In this case, a porous carbon support having controlled pore properties may be obtained even when the solid pitch pellet, which will be described below, is stabilized, carbonized, and activated without separately pulverizing the solid pitch pellet.

In a specific embodiment of the present invention, pyrolysis and polycondensation of the petroleum-based raw material may be performed at a temperature of 350 to 500°C. In a preferred specific embodiment of the present invention, pyrolysis and polycondensation of the petroleum-based raw material may be performed at a temperature of 400 to 500°C. In a more preferred specific embodiment of the present invention, pyrolysis and polycondensation of the petroleum-based raw material may be performed at a temperature of 430 to 470°C. When the pyrolysis and polycondensation temperature of the petroleum-based raw material is 350 to 500°C, pitch containing a relatively large amount of low-molecular-weight components may be produced, and, in the activation process of step (e), which will be described below, components having relatively low molecular weights may be vaporized first, thereby sufficiently forming mesopores in the carbon support. If the pyrolysis and polycondensation temperature of the petroleum-based raw material is less than 350°C, it is difficult to produce pitch that is solid at room temperature, and if the temperature exceeds 500°C, pitch contains a relatively large amount of high-molecular-weight components, making it difficult to produce a carbon support having mesopores.

In a specific embodiment of the present invention, pyrolysis and polycondensation of the petroleum-based raw material may be performed under an atmosphere of an oxidizing gas, an inert gas, or a mixed gas thereof. In a preferred specific embodiment of the present invention, the oxidizing gas may be oxygen, ozone, or a combination thereof, the inert gas may be nitrogen, helium, neon, argon, or a combination thereof, and the mixed gas may be air, but the present invention is not particularly limited thereto.

When an oxidizing gas is used during pyrolysis and polycondensation of the petroleum-based raw material, pitch having a high softening point may be produced, but it is difficult to perform pyrolysis and polycondensation at a high temperature. When an inert gas is used during pyrolysis and polycondensation of the petroleum-based raw material, pyrolysis and polycondensation may be performed at a high temperature, but it is difficult to produce pitch having a relatively high softening point. When a mixed gas of an oxidizing gas and an inert gas is used during pyrolysis and polycondensation of the petroleum-based raw material, pyrolysis and polycondensation may be performed at a relatively high temperature to produce pitch having a relatively high softening point.

In a specific embodiment of the present invention, during pyrolysis and polycondensation of the petroleum-based raw material, the above gas may be supplied at a flow rate of 10 to 800 mL/min. In a preferred specific embodiment of the present invention, during pyrolysis and polycondensation of the petroleum-based raw material, the above gas may be supplied at a flow rate of 100 to 500 mL/min. When the flow rate of the above gas is less than 10 mL/min, the yield of pitch increases, but the amount of low-molecular-weight components becomes excessive, which is disadvantageous for a subsequent process such as stabilization. When the flow rate of the above gas exceeds 800 mL/min, the yield of pitch may decrease.

In a specific embodiment of the present invention, pyrolysis and polycondensation of the petroleum-based raw material may be performed for 1 to 10 hours. In a preferred specific embodiment of the present invention, pyrolysis and polycondensation of the petroleum-based raw material may be performed for 2 to 8 hours. In a more preferred specific embodiment of the present invention, pyrolysis and polycondensation of the petroleum-based raw material may be performed for 2 to 7 hours. When the pyrolysis and polycondensation time of the petroleum-based raw material is less than 1 hour, it is difficult to produce pitch having a high softening point, and when the pyrolysis and polycondensation time exceeds 10 hours, quinoline-insoluble components may be excessively generated.

In a specific embodiment of the present invention, pyrolysis and polycondensation of the petroleum-based raw material may be performed under stirring. The stirring conditions for the petroleum-based raw material are not particularly limited, but, for example, a stirrer rotating at 10 to 500 rpm may be used.

In a specific embodiment of the present invention, the pitch synthesized in step (a) may have a softening point of 200 to 350°C. In a preferred specific embodiment of the present invention, the pitch may have a softening point of 200 to 330°C. In a more preferred embodiment of the present invention, the pitch may have a softening point of 200 to 300°C. Since the pitch produced according to the present invention has a high softening point, when it is used as a precursor for producing a carbon support, the stabilization process is easy, and a high yield may be obtained after carbonization and activation.

In a specific embodiment of the present invention, the yield of pitch synthesized in step (a) may be 10 to 50 wt%. In a preferred specific embodiment of the present invention, the yield of the pitch may be 10 to 40 wt%. In a more preferred specific embodiment of the present invention, the yield of the pitch may be 20 to 30 wt%.

In a specific embodiment of the present invention, before step (a), a pretreatment step of pretreating the petroleum-based raw material may be performed. By removing low-boiling-point components contained in the petroleum-based raw material through the pretreatment step, pitch having a higher softening point may be produced.

In a specific embodiment of the present invention, the pretreatment step may be performed at a temperature equal to or lower than the temperature for pyrolysis and polycondensation of the petroleum-based raw material in step (a), but the present invention is not particularly limited to this condition. Specifically, the pretreatment step may be performed at 250 to 450°C, preferably at 250 to 400°C, and more preferably at 300 to 400°C.

In a specific embodiment of the present invention, the pretreatment step may be performed for a time equal to or shorter than the time for pyrolysis and polycondensation of the petroleum-based raw material in step (a), but the present invention is not particularly limited to this condition. Specifically, the pretreatment step may be performed for 1 to 8 hours, preferably for 1 to 6 hours, and more preferably for 1 to 5 hours.

In addition, in step (b), the pitch may be solidified and pelletized to obtain pelletized pitch, or the pitch may be solidified, pelletized, and pulverized to obtain powdered pitch.

First, in the case of pelletized pitch, the pitch (liquid) obtained in step (a) is solidified, for example, by extrusion and cooling, and pelletized to a desired size to obtain solid pitch pellets (pelletized pitch). The process of obtaining solid pitch pellets by extruding, cooling, and pelletizing the liquid pitch may be performed using a commercialized apparatus. For example, this process may be performed using a double-belt cooler & flaker manufactured by IPCO, but the present invention is not particularly limited to this apparatus.

The pitch pellets (pelletized pitch) obtained in step (b) have an average particle size of 1 to 30 mm, preferably 5 to 25 mm. When the average particle size of the pitch pellets (pelletized pitch) is within this range, the porous carbon support may be produced through stabilization, carbonization, and activation, which will be described below, without separately pulverizing the pitch pellets (pelletized pitch).

In addition, in the case of powdered pitch, the pitch pellets (pelletized pitch) may be further crushed or pulverized and classified. The pitch pellets (pelletized pitch) may be further micronized through crushing or pulverization, and the particle size distribution of the pitch pellets (pelletized pitch) may be made uniform through classification. Here, the classification may be performed by dry classification, wet classification, or classification using a sieve. Through crushing or pulverization and classification, powdered pitch having an average particle diameter of 50 to 500 µm may be obtained.

In step (c), a step of stabilizing the pelletized pitch or the powdered pitch may be performed.

First, the pelletized pitch or powdered pitch obtained in step (b) is primarily oxidized to stabilize the carbon structure of the pitch.

In a specific embodiment of the present invention, stabilization of the pitch may be performed under an oxidizing gas atmosphere. In a preferred specific embodiment of the present invention, stabilization of the pitch may be performed under an air atmosphere, but the present invention is not particularly limited thereto.

In a specific embodiment of the present invention, stabilization of the pitch may be performed at a temperature of 100 to 500°C, preferably 150 to 300°C. When stabilization of the pitch is performed at this temperature, the carbon structure in the pelletized pitch or powdered pitch is changed from thermoplastic to thermosetting, so that the structure may be stably maintained in the subsequent carbonization process. At this time, the heating rate may be 2 to 10°C/min. If the heating rate is too low, productivity may be poor, and if the heating rate is excessively high, uniform stabilization treatment may be difficult.

In a specific embodiment of the present invention, the stabilization may be performed at a pressure of 0.1 to 10 bar, preferably 0.5 to 5 bar. When the stabilization is performed at this pressure, the structure of even the carbon inside the pelletized pitch or powdered pitch may be sufficiently stabilized.

In a specific embodiment of the present invention, the stabilization may be performed under a flow rate condition of 0.1 to 500 mL/min, preferably 1 to 300 mL/min, of an oxidizing gas, preferably air. When the stabilization is performed under this oxidizing-gas flow rate condition, the structure of even the carbon inside the pelletized pitch or powdered pitch may be sufficiently stabilized.

In a specific embodiment of the present invention, the stabilization may be performed for 1 to 10 hours, preferably 2 to 8 hours. When the stabilization is performed for this period of time, the structure of even the carbon inside the pelletized pitch or powdered pitch may be sufficiently stabilized.

In step (d), the stabilized pitch is carbonized to obtain a carbonized product. Through carbonization of the stabilized pitch, other functional groups included in the pitch are removed, and a carbonized product substantially composed of pure carbon may be obtained.

In a specific embodiment of the present invention, the carbonization may be performed under an inert gas atmosphere. In a preferred specific embodiment of the present invention, the carbonization may be performed under a nitrogen or argon atmosphere, but the present invention is not particularly limited thereto.

In a specific embodiment of the present invention, the carbonization may be performed at a temperature of more than 700°C and 1,000°C or less, preferably 800 to 900°C. If the temperature during the carbonization is lower than this range, carbonization may not be sufficiently performed, and if the temperature during the carbonization is higher than this range, the carbonization yield may decrease.

In a specific embodiment of the present invention, the carbonization may be performed under a flow rate condition of 0.1 to 30 mL/min, preferably 0.1 to 10 mL/min, of an inert gas, preferably nitrogen. When the carbonization is performed under this inert-gas flow rate condition, the stabilized pitch may be sufficiently carbonized.

In a specific embodiment of the present invention, the carbonization may be performed for 0.5 to 5 hours, preferably 1 to 3 hours. When the carbonization is performed for this period of time, the stabilized pitch may be sufficiently carbonized.

In step (e), the carbonized product (carbonized pitch) is activated to obtain a porous carbon support. Through activation of the carbonized product, pores are formed in the carbonized product, thereby making it possible to obtain the porous carbon support.

In a specific embodiment of the present invention, activation of the carbonized product may be performed under an oxidizing gas atmosphere. In a preferred specific embodiment of the present invention, activation of the carbonized product may be performed under a steam atmosphere, but the present invention is not particularly limited thereto.

In a specific embodiment of the present invention, activation of the carbonized product may be performed at a temperature of more than 700°C and 1,000°C or less, preferably 800 to 900°C. When activation of the carbonized product is performed at this temperature, a porous carbon support in which micropores and mesopores are sufficiently formed may be obtained.

In a specific embodiment of the present invention, activation of the carbonized product may be performed at a pressure of 0.1 to 10 bar, preferably 0.1 to 5 bar. When activation of the carbonized product is performed at this pressure, a porous carbon support in which micropores and mesopores are sufficiently formed may be obtained.

In a specific embodiment of the present invention, activation of the carbonized product may be performed under a flow rate condition of 0.1 to 100 mL/min, preferably 0.1 to 50 mL/min, of an oxidizing gas, preferably steam. When activation of the carbonized product is performed under this oxidizing-gas flow rate condition, a porous carbon support in which micropores and mesopores are sufficiently formed may be obtained.

In a specific embodiment of the present invention, activation of the carbonized product may be performed for 0.5 to 5 hours, preferably 1 to 3 hours. When activation of the carbonized product is performed for this period of time, a porous carbon support in which micropores and mesopores are sufficiently formed may be obtained.

In a specific embodiment of the present invention, the stabilization, carbonization, and activation of steps (c) to (e) may each be performed in a heating furnace using microwaves. In a preferred specific embodiment of the present invention, all of the stabilization, carbonization, and activation of steps (c) to (e) may be performed in a heating furnace using microwaves. A heating furnace using microwaves is preferable because the temperature of the pitch itself may be increased without increasing the external temperature of the pitch, but the present invention is not particularly limited thereto.

In a specific embodiment of the present invention, steps (c) to (e) may be continuously performed in one apparatus. In a preferred specific embodiment of the present invention, steps (c) to (e) may be continuously performed in one rotary kiln, but the present invention is not particularly limited to this apparatus. Since steps (c) to (e) are continuously performed in one apparatus, optimization of the process may be achieved.

In a specific embodiment of the present invention, the porous carbon support obtained in step (e) may be further crushed or pulverized and classified. The porous carbon support may be further micronized through crushing or pulverization, and the particle size distribution of the porous carbon support may be made uniform through classification. Here, the classification may be performed by dry classification, wet classification, or classification using a sieve. Through crushing or pulverization and classification, a porous carbon support powder having an average particle diameter of 1 to 20 µm, a BET specific surface area of 300 to 3,000 m²/g, and a tap density of 0.05 to 0.5 g/mL may be obtained. In addition, the porous carbon support powder has a mesopore volume ratio of 10 to 80%, based on the total pore volume, wherein the mesopores have a pore size of 2 to 50 nm.

Meanwhile, when the pelletized pitch is stabilized, carbonized, and activated without additionally pulverizing the pitch in step (b) to obtain a porous carbon support, the carbon support may be pulverized (or additionally classified) so as to have an average particle size of 1 to 20 µm, but the present invention is not limited thereto.

In the method for producing a carbon/silicon-polymer composite according to an embodiment of the present invention, the obtained carbon/silicon-polymer composite may be crushed or pulverized and classified. The particle size distribution of the composite may be made uniform through classification. Here, the classification may be performed by dry classification, wet classification, or classification using a sieve.

### Negative Electrode Material

According to another embodiment of the present invention, there is provided a negative electrode material including the carbon/silicon-polymer composite.

The negative electrode material according to an embodiment of the present invention may further include, in addition to the carbon/silicon-polymer composite, a carbon-based negative electrode material, specifically, a graphite-based negative electrode material. For example, the negative electrode material may be obtained by mixing the carbon/silicon-polymer composite according to an embodiment of the present invention with a carbon-based negative electrode material, for example, a graphite-based negative electrode material.

Here, the carbon-based negative electrode material may include, for example, at least one selected from the group consisting of natural graphite, artificial graphite, soft carbon, hard carbon, mesocarbon, carbon fiber, carbon nanotube, pyrolytic carbons, cokes, calcined organic polymer compound, and carbon black, but is not particularly limited thereto.

The content of the carbon-based negative electrode material in the negative electrode material according to an embodiment of the present invention may be 2 to 80 wt%, preferably 5 to 70 wt%, and more preferably 30 to 70 wt%, based on the total weight of the negative electrode material.

The negative electrode material according to an embodiment of the present invention may be effectively used for producing a negative electrode of a secondary battery, specifically, a negative electrode of a lithium secondary battery and a negative electrode of an all-solid-state battery.

### Lithium Ion Battery

According to another embodiment of the present invention, there is provided a lithium ion battery including the negative electrode material.

The lithium ion battery may include an electrolyte, a positive electrode, a negative electrode, and a separator between the positive electrode and the negative electrode, and may include the above-described negative electrode material as a negative electrode material of the negative electrode.

In addition, in addition to the negative electrode material of the lithium ion battery, the negative electrode configuration, the positive electrode configuration, the electrolyte configuration, and the separator configuration may adopt known configurations of a lithium ion battery, and thus are not particularly limited in the present invention.

### All-Solid-State Battery

According to another embodiment of the present invention, there is provided an all-solid-state battery including an SEI (Solid Electrolyte Interphase) layer including the carbon/silicon-polymer composite.

The all-solid-state battery may be an all-solid-state battery including a positive electrode, a negative electrode, and a solid electrolyte between the positive electrode and the negative electrode, and the negative electrode may include a negative electrode material layer, wherein at least a portion of the negative electrode material particles in the negative electrode material layer may include the above-described SEI (Solid Electrolyte Interphase) layer including the carbon/silicon-polymer composite.

Meanwhile, the negative electrode material particles may be a carbon-based negative electrode material, and in this case, since the content may be the same as that described above with respect to the negative electrode material, a related description thereof will be omitted.

In addition, in addition to the negative electrode material particles and the SEI layer of the all-solid-state battery, the negative electrode configuration, the positive electrode configuration, and the solid electrolyte configuration may adopt known configurations of an all-solid-state battery, and thus are not particularly limited in the present invention.

### MODE FOR CARRYING OUT THE INVENTION

### [Examples]

Hereinafter, the present invention will be described in more detail by way of Examples. The following Examples are merely illustrative of the present invention, and the scope of the present invention is not limited thereto.

### <Preparation Example>

300 g of petroleum-based residual oil (YNCC, HTC PFO (pyrolysis fuel oil)) was charged into a reactor equipped with a stirrer, and pyrolysis and polycondensation were performed at 450°C for 3 hours while supplying nitrogen at a flow rate of 100 mL/min. At this time, the stirrer was rotated at a speed of 200 rpm to mix the reactants. The polymerized pitch was solidified and pelletized to obtain solid pitch pellets having an average particle size of 1 to 30 mm.

The solid pitch pellets obtained above were pulverized to prepare pitch particles having an average particle size of 200 µm, and then introduced into a rotary kiln having three zones to sequentially perform stabilization, carbonization, and activation. The conditions for the stabilization, carbonization, and activation are shown in Table 1 below.

The specific surface area of the carbon support was measured using Belsorp mini II in accordance with ASTM D4820-93. The tap density of the carbon support was measured using a tap density analyzer (Electrolab, ETD-1020x) in accordance with ASTM B527. The average particle size of the carbon support was measured using a particle size analyzer (Horiba, laser particle analyzer, LA-960V2) in accordance with ASTM E112. The results are shown in Table 1.

**[Table 1]**

| Step | Condition | Reference Example |
|---|---|---|
| Stabilization | Temperature (°C) | 300 |
| | Time (hr) | 3 |
| | Atmosphere | Air |
| Carbonization | Temperature (°C) | 900 |
| | Time (hr) | 1 |
| | Atmosphere | Nitrogen |
| Activation | Temperature (°C) | 900 |
| | Time (hr) | 3 |
| | Steam flow rate (mL/min) | 200 |
| Support Properties | Average particle size (µm) | 200 |
| | Specific surface area (m²/g) | 1409.1 |
| | Tap density (g/mL) | 0.44 |

The porous carbon support of Reference Example was pulverized using a pulverizer (Netzsch, air jet mill) to obtain a fine powder of a porous carbon support having an average particle size of 7 µm. Subsequently, 15 g of the fine powder of the porous carbon support was introduced into a rotating rotary kiln, and silane (SiH₄) gas was injected to form a silicon layer on the porous carbon support, thereby producing a carbon-silicon composite. The conditions for formation of the silicon layer and the properties of the carbon support after formation of the silicon layer are shown in Table 2 below.

**[Table 2]**

| Step | | Reference Example |
|---|---|---|
| Silicon Layer Formation Conditions | Batch (g) | 15 |
| | Pressure | Atmospheric pressure |
| | Temperature (°C) | 475 |
| | Time (min) | 120 |
| Properties of Carbon-Silicon Composite After Silicon Layer Formation | Average particle size (µm) | 8.9 |
| | Specific surface area (m²/g) | 10.4 |
| | Tap density (g/mL) | 0.6 |

### <Example 1: Production of Carbon/Silicon-Polymer Composite>

A carbon/silicon-polymer composite was produced using the reactor schematically shown in FIG. 1. 5 g of the carbon-silicon composite produced according to Preparation Example was uniformly spread and disposed on a circular silicon wafer. A vaporized monomer and initiator were supplied into the reactor chamber through the inlet to form a polymer thin film (pDVB) on the surface of the porous carbon support of the carbon-silicon composite, inside the pores thereof, and on the surface of the silicon. The average thickness of the formed polymer thin film was 10 nm. The specific materials and process conditions used in Example 1 are as follows.
- Carbon/silicon-polymer composite: Preparation Example
- Monomer: Divinylbenzene (DVB) (Aldrich, technical grade, 80%)
- Initiator: di-t-butyl peroxide (Aldrich, 98%)
- Average initiator feed flow rate: 0.26 sccm
- Average monomer feed flow rate: 0.425 sccm
- Filament temperature: 140°C
- Reaction time: 1 hour
- Pressure in reactor chamber: 160 mTorr
- Surface temperature of reactor mounting part (silicon wafer): 35°C

### <Example 2>

A carbon/silicon-polymer composite was produced in the same manner as in Example 1, except that the following was changed to form a polymer thin film (pDMAMS) on the surface of the porous carbon support of the carbon-silicon composite, inside the pores thereof, and on the surface of the silicon. The average thickness of the formed polymer thin film was 10 nm.
- Monomer: Dimethylaminomethyl styrene (Acros, 90%)

### <Example 3>

A carbon/silicon-polymer composite was produced in the same manner as in Example 1, except that the following was changed to form a polymer thin film (pPFDA) on the surface of the porous carbon support of the carbon-silicon composite, inside the pores thereof, and on the surface of the silicon. The average thickness of the formed polymer thin film was 10 nm.
- Monomer: 1H,1H,2H,2H-perfluorodecyl acrylate (Aldrich, 97%)
- Reaction time: 15 minutes
- Pressure in reactor chamber: 80 mTorr
- Surface temperature of reactor mounting part (silicon wafer): 38°C

### <Example 4>

A carbon/silicon-polymer composite was produced in the same manner as in Example 1, except that the following was changed to form a polymer thin film (pGMA) on the surface of the porous carbon support of the carbon-silicon composite, inside the pores thereof, and on the surface of the silicon. The average thickness of the formed polymer thin film was 10 nm.
- Monomer: Glycidyl methacrylate (GMA) (Aldrich, 97%
- Reaction time: 2 hours
- Pressure in reactor chamber: 80 mTorr
- Surface temperature of reactor mounting part (silicon wafer): 38°C

### <Example 5>

A carbon/silicon-polymer composite was produced in the same manner as in Example 1, except that the following was changed to form a polymer thin film (pDVB) on the surface of the porous carbon support of the carbon-silicon composite, inside the pores thereof, and on the surface of the silicon. The average thickness of the formed polymer thin film was 1 nm.

In order to control the thickness of the polymer thin film, the reaction time of the iCVD process was controlled to 10 minutes.

### <Example 6>

A carbon/silicon-polymer composite was produced in the same manner as in Example 1, except that the following was changed to form a polymer thin film (pDVB) on the surface of the porous carbon support of the carbon-silicon composite, inside the pores thereof, and on the surface of the silicon. The average thickness of the formed polymer thin film was 500 nm.

In order to control the thickness of the polymer thin film, the reaction time of the iCVD process was controlled to 6 hours.

### <Comparative Example 1>

The carbon-silicon composite according to Preparation Example was prepared.

### <Experimental Example 1>

### (1) X-ray Photoelectron Spectroscopy Analysis

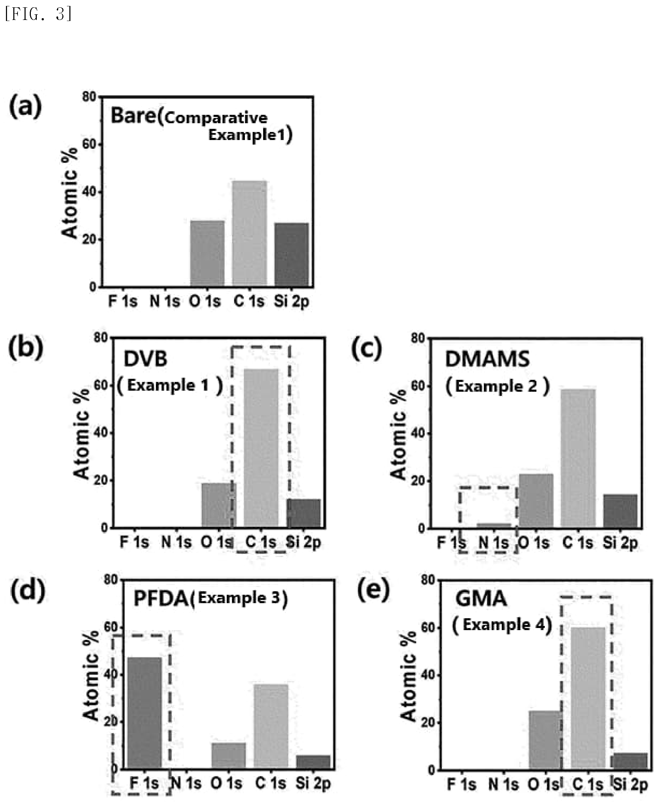

For Examples 1 to 4 and Comparative Example 1, elements on particle surfaces were analyzed by X-ray photoelectron spectroscopy (XPS) (Multilab 2000, Thermo). The results are shown in FIG. 3.

As a result, in Comparative Example 1 (FIG. 3a), in which no polymer thin film was formed, fluorine and nitrogen were not detected and only oxygen, carbon, and silicon were detected. It was confirmed that the carbon ratio increased when the pDVB polymer thin film was formed (Example 1), that nitrogen was detected when the pDMAMS polymer thin film was formed (Example 2), that a substantial amount of fluorine was detected when the pPFDA polymer thin film was formed (Example 3), and that the carbon ratio increased when the pGMA polymer thin film was formed (Example 4). Accordingly, it can be seen that, by the production method of the present invention, a carbon/silicon-polymer composite in which a carbon-, nitrogen-, or fluorine-containing polymer thin film was formed on the surface of the porous carbon support, inside the pores thereof, and on the surface of the silicon was produced.

### (2) TEM Image Analysis

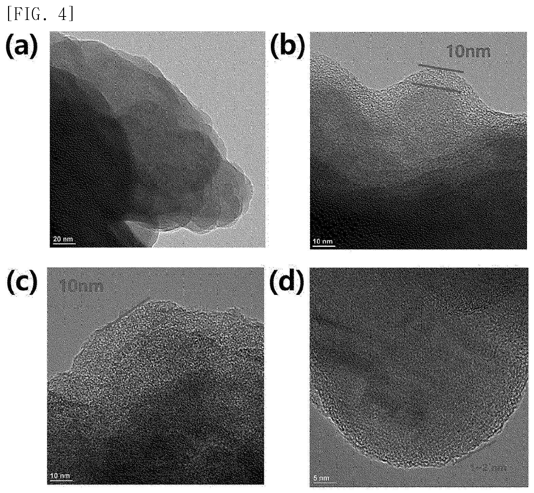

Examples 1, 2, and 5 and Comparative Example 1 were observed using a transmission electron microscope (TEM) (FIG. 4).

As a result, in Comparative Example 1 (FIG. 4a), in which no polymer thin film was formed, no separate polymer thin film was observed. In Examples 1 (FIG. 4b) and 2 (FIG. 4c), a polymer thin film having a thickness of 10 nm was observed, and in Example 5 (FIG. 4d), a polymer thin film having a thickness of 1 to 2 nm was observed. Through this, it was confirmed that, by the production method of the present invention, the polymer thin film was well formed on the surface of the porous carbon support, inside the pores thereof, and on the surface of the silicon, and that the formed polymer thin film had a uniform thickness.

### <Experimental Example 2: Electrochemical Evaluation>

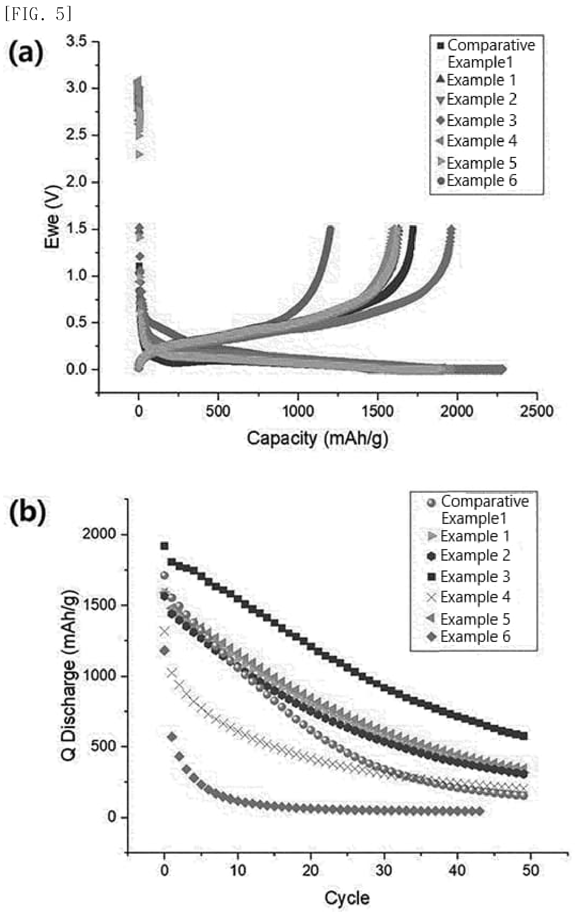

Half coin cells were respectively fabricated using the composites of Examples 1 to 6 and Comparative Example 1, and electrochemical evaluation was performed. The half coin cell fabrication conditions are shown in Table 3, and the evaluation results are shown in Table 4 and FIG. 5. In Table 3, AM, CM, and BM respectively denote an active material (carbon-silicon/carbon composite), a conductive material (Super P carbon black), and a binder (styrene-butadiene rubber/carboxymethyl cellulose, 5:5), and EC, EMC, DMC, FEC, VC, and PS respectively denote ethylene carbonate, ethyl methyl carbonate, dimethyl carbonate, fluoroethylene carbonate, vinylene carbonate, and propanesultone.

**[Table 3]**

| Composition (AM:CM:BM) | 8:1:1 |
|---|---|
| Areal capacity (mAh/cm²) | 1 |
| Electrolyte | 1.3 M LiPF₆ EC/EMC/DMC 3:5:2, 10% FEC, 0.2% LiBF₄, 0.5% VC, 1% PS |
| Cut-Off Voltage (V) | Formation: 0.005-1.5, Cycle test: 0.005-1.2 |
| C-rate (C) | Formation: 0.1-0.1, CV cut-off at 0.005 V with 0.01C |

**[Table 4]**

| Sample | Polymer type | Average thickness of polymer thin film (nm) | Discharge capacity (mAh/g) | ICE (%) | Cycle retention (%) | Cycle |
|---|---|---|---|---|---|---|
| Example 1 | pDVB | 10 | 1629 | 84.9 | 21.2 | 50 |
| Example 2 | pDMAMS | 10 | 1630 | 85.1 | 20.8 | 50 |
| Example 3 | pPFDA | 10 | 1962 | 86.1 | 31.8 | 50 |
| Example 4 | pGMA | 10 | 1596 | 81.2 | 19.5 | 50 |
| Example 5 | pDVB | 1 | 1618 | 85.2 | 22.9 | 50 |
| Example 6 | pDVB | 500 | 1204 | 74.6 | 7.7 | 44 |
| Comparative Example 1 | - | - | 1724 | 86 | 9.7 | 50 |

As can be confirmed from Table 4 and FIG. 5, Examples 1 to 5 showed a reversible capacity of 1500 mAh/g or more and were confirmed to have excellent ICE and cycle retention.

In addition, in the case of Example 6, it was confirmed that, since the average thickness of the polymer thin film was relatively greater than in Examples 1 to 5, the reversible capacity was low and the cycle retention was also deteriorated.

Further, in the case of Comparative Example 1, it was confirmed that, since no polymer thin film was formed, the cycle retention was significantly reduced.

Although exemplary embodiments of the present invention have been described above, the spirit of the present invention is not limited to the embodiments presented herein. It will be understood by those skilled in the art that various other embodiments may be readily proposed within the scope of the same inventive concept by adding, modifying, deleting, or supplementing components, and such embodiments shall also fall within the scope of the present invention.

**<Description of Symbols>**

| | | | |
|---|---|---|---|
| 10: | carbon/silicon-polymer composite | 11: | porous carbon support |
| 12: | silicon | 13: | polymer thin film |
| 100: | chamber | 200: | mounting part |
| 300: | inlet | 400: | outlet |
| 500: | heating element | 1000: | reactor |

## Claims

1. A carbon/silicon-polymer composite, comprising:
a carbon-silicon composite including a porous carbon support and silicon disposed on a surface of the porous carbon support and inside pores thereof; and
a polymer thin film disposed on the surface of the porous carbon support, inside the pores thereof, and on a surface of the silicon.

2. The carbon/silicon-polymer composite of claim 1, wherein the porous carbon support has a BET specific surface area of 300 to 3,000 m²/g, a tap density of 0.05 to 0.5 g/mL, and an average particle diameter of 1 to 20 µm.

3. The carbon/silicon-polymer composite of claim 1, wherein the silicon is present in an amount of 5 to 80 wt% based on a total weight of the carbon/silicon-polymer composite.

4. The carbon/silicon-polymer composite of claim 1, wherein the polymer thin film is present in an amount of 1 to 30 wt% based on a total weight of the carbon/silicon-polymer composite.

5. The carbon/silicon-polymer composite of claim 1, wherein the polymer thin film has a thickness of 1 to 450 nm.

6. A method for producing a carbon/silicon-polymer composite, comprising:
(1) producing a carbon-silicon composite by forming silicon on a surface of and inside pores of a porous carbon support; and
(2) producing a carbon/silicon-polymer composite by forming a polymer thin film on a surface of the porous carbon support of the carbon-silicon composite, inside pores thereof, and on a surface of the silicon through initiator-based chemical vapor deposition (iCVD).

7. The method of claim 6,
wherein step (2) comprises:
(2-1) supplying the carbon-silicon composite into a reactor;
(2-2) supplying a monomer and an initiator into the reactor to which the carbon-silicon composite has been supplied; and
(2-3) activating the initiator to polymerize the monomer, thereby forming the polymer thin film on the surface of the porous carbon support of the carbon-silicon composite, inside the pores thereof, and on the surface of the silicon.

8. The method of claim 7, wherein, in step (2-2), the monomer is supplied at a flow rate of 0.1 sccm to 10 sccm, and the initiator is supplied at a flow rate of 0.1 sccm to 5 sccm.

9. The method of claim 7,
wherein the initiator is activated through a predetermined heat treatment, and
the heat treatment is performed at a temperature of 135 to 350°C.

10. The method of claim 7, wherein step (2-3) is performed under a vacuum condition at a pressure of 50 to 1,000 mTorr for 10 minutes to 6 hours.

11. A negative electrode material, comprising:
the carbon/silicon-polymer composite according to any one of claims 1 to 5; and
a carbon-based negative electrode material.

12. An all-solid-state battery comprising an SEI (Solid Electrolyte Interphase) layer including the carbon/silicon-polymer composite according to any one of claims 1 to 5.

13. A lithium ion battery comprising the negative electrode material according to claim 11.
